# EUROPEAN PATENT APPLICATION

(11) **EP 4 170 773 A1**
(43) Date of publication of application: **26.04.2023**
(21) Application number: 21892269.8
(22) Date of filing: 08.11.2021
(51) Int. Cl.: H01M 10/0567, H01M 4/58, H01M 10/0525, H01M 10/0569

(54) **LITHIUM SECONDARY BATTERY**

(30) Priority: 13.11.2020 KR 20200151754
(71) Applicant: LG Energy Solution, Ltd., Seoul 07335 (KR)
(72) Inventor: AN, Yu Ha, Daejeon 34122 (KR); HWANG, Seung Hae, Daejeon 34122 (KR); KIM, Hyun Seung, Daejeon 34122 (KR); LEE, Chul Haeng, Daejeon 34122 (KR); OH, Jeong Woo, Daejeon 34122 (KR)
(74) Representative: Hoffmann Eitle
(86) International application number: PCT/KR2021/016153
(87) International publication number: WO 2022/103101

(57) **Abstract**

The present invention relates to a lithium secondary battery including a non-aqueous electrolyte solution containing a lithium salt, an organic solvent, a first additive represented by Formula 1, and a second additive represented by Formula 2, a positive electrode including a lithium iron phosphate-based composite oxide, a negative electrode including a negative electrode active material, and a separator interposed between the positive electrode and the negative electrode, wherein an amount of the first additive and an amountof the second additive are each 0.1 wt% to 5 wt% based on the total weight of the non-aqueous electrolyte solution.

## Description

### TECHNICAL FIELD

This application claims priority from Korean Patent Application No. 10-2020-0151754, filed on November 13, 2020, the disclosures of which are incorporated herein in its entirety by reference.

The present invention relates to a lithium secondary battery, and more particularly, to a lithium secondary battery with improved high-temperature performance by enhancing the stability of an film on electrode.

### BACKGROUND ART

A lithium secondary battery is generally manufactured by interposing a separator between a positive electrode including a positive electrode active material composed of a transition metal oxide containing lithium, and a negative electrode including a negative electrode active material capable of storing lithium ions, thereby providing an electrode assembly, inserting the electrode assembly into a battery case, injecting thereto a non-aqueous electrolyte solution, which is a medium for transferring the lithium ions, and then sealing the battery case.

A lithium secondary battery may be miniaturized, and has high energy density and working voltage, thereby being applied in various fields including mobile devices, electronic products, electric vehicles, and the like. As the field of application of a lithium secondary battery becomes diverse, required physical properties conditions of the lithium secondary battery are also increasing, and particularly, there is a demand for the development of a lithium secondary battery which may be stably driven even under high-temperature conditions.

At high temperatures, PF₆⁻ anions are thermally decomposed from a lithium salt, such as LiPF₆, included in an electrolyte solution to generate a Lewis acid such as PF₅, and the generated Lewis acid reacts with moisture to generate HF. Due to decomposition products such as PF₅ and HF, unstable structural changes of a positive electrode according to charging-discharging, and the like, transition metals of a positive electrode material may be eluted into an electrolyte solution, and particularly, when a lithium iron phosphate (LFP) positive electrode is included, electrolyte decomposition due to the elution of iron, and degradation in performance of a battery are intensified, so that there is a need for improvement.

### DISCLOSURE OF THE INVENTION

### TECHNICAL PROBLEM

An aspect of the present invention is to solve the problem of electrolyte decomposition due to the elution of iron in a battery including an LFP positive electrode as described above, and ultimately, to provide a lithium secondary battery with improved initial resistance and durability.

### TECHNICAL SOLUTION

According to an aspect of the present invention, there is provided a lithium secondary battery including a non-aqueous electrolyte solution containing a lithium salt, an organic solvent, a first additive represented by Formula 1 below, and a second additive represented by Formula 2 below, a positive electrode including a lithium iron phosphate-based composite oxide, a negative electrode including a negative electrode active material, and a separator interposed between the positive electrode and the negative electrode, wherein an amount of the first additive and an amount of the second additive are each 0.1 wt% to 5 wt% based on the total weight of the non-aqueous electrolyte solution.

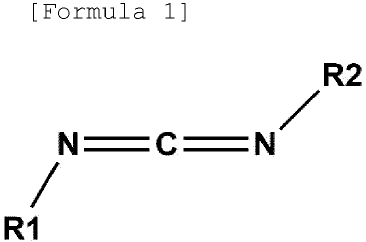

In Formula 1 above,
R1 and R2 are the same as or different from each other, and are each independently a substituted or unsubstituted C₁-C₁₀ alkyl group, a substituted or unsubstituted C₃-C₁₅ cycloalkyl group, or a substituted or unsubstituted C₆-C₃₀ aryl group.

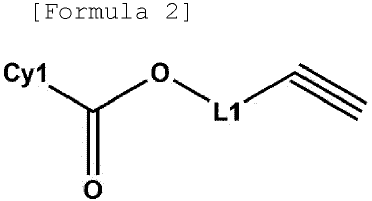

In Formula 2 above,
Cy1 is a substituted or unsubstituted C₂-C₃₀ heterocyclic group, and
L1 is a direct bond, or a substituted or unsubstituted C₁-C₁₀ alkylene group.

### ADVANTAGEOUS EFFECTS

The present invention uses an electrolyte solution including a specific additive combination together with an LFP-based positive electrode active material, so that a lithium secondary battery having excellent durability while exhibiting low initial resistance may be implemented.

### MODE FOR CARRYING OUT THE INVENTION

Hereinafter, the present invention will be described in more detail.

In the present disclosure, the term "substituted or unsubstituted" means being substituted with one or more substituents selected from deuterium, a halogen group, a hydroxy group, an amino group, a thiol group, a nitro group, a nitrile group, a silyl group, a straight or branched C₁-C₁₀ alkyl group, or a straight or branched C₁-C₁₀ alkoxy group, or not having any substituent.

In the present disclosure, an alkylene group refers to an alkane having two bonding positions, that is, a divalent saturated hydrocarbon group. Except that these are divalent groups, the description of an alkyl group may be applied thereto.

In general, LiPF₆, a lithium salt widely used in a lithium secondary battery, forms a decomposition product such as hydrogen fluoride (HF) and PF₅ caused by high temperatures or moisture. Such a decompose product has properties of an acid, and deteriorates a film or the surface of an electrode in a battery.

For example, the decomposition product easily elutes a transition metal constituting a positive electrode into an electrolyte solution, and the eluted transition metal ions move to a negative electrode through the electrolyte solution, and then electro-deposited on a solid electrolyte interphase (SEI) film formed on the negative electrode to cause an additional electrolyte decomposition reaction.

Such a series of reactions reduce the amount of available lithium ions in the battery, which causes the deterioration in battery capacity, and also bring in an additional electrolyte solution decomposition reaction, which causes an increase in resistance, so that the lifespan and high-temperature performance of a battery may be degraded.

Therefore, the present inventors have confirmed that it is possible to improve both the initial resistance properties and the durability of a battery including a lithium iron phosphate (LFP)-based positive electrode by including a first additive represented by Formula 1 below which is capable of suppressing the formation of additional Lewis acids (HF) by adsorbing moisture, and including a second additive represented by Formula 2 below which is capable of forming a robust SEI film of nitrile-based and polymer components by removing decomposition products such as PF₅ and metal ions eluted from a positive electrode.

Specifically, the present inventors have found that it is possible to improve the initial capacity retention rate through the first additive, and improve the long-term lifespan through the second additive, and that as a synergistic effect of the two additives, when an SEI film is formed through the second additive, the first additive reduces an LiF component, which is a decomposition product of a salt present on the surface of an electrode, through moisture control, so that a relatively organic rich film may be formed to obtain an effect of further reducing resistance.

A lithium secondary battery according to the present invention includes a non-aqueous electrolyte solution containing a lithium salt, an organic solvent, a first additive represented by Formula 1 below, and a second additive represented by Formula 2 below, a positive electrode including a lithium iron phosphate-based composite oxide, a negative electrode including a negative electrode active material, and a separator interposed between the positive electrode and the negative electrode, and the description of each component is as follows.

### (1) Non-aqueous electrolyte solution

The non-aqueous electrolyte solution of the present invention includes a lithium salt, an organic solvent, a first additive, and a second additive.

### (a) Lithium salt

The lithium salt may include Li⁺ as cations, and may include, as anions, any one selected from F⁻, Cl⁻, Br⁻, I⁻, NO₃⁻, N(CN)₂⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P-, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

Specifically, the lithium salt may be one or more selected from the group consisting of LiPF₆, LiClO₄, LiFSI, LiTFSI, LiSO₃CF₃, LiPO₂F₂, lithium bis(oxalato)borate (LiBOB), lithium difluoro(bisoxalato) phosphate (LiDFBP), lithium tetrafluoro(oxalato) phosphate (LiTFOP), and lithium fluoromalonato(difluoro) borate (LiFMDFB), preferably LiPF₆. LiPF₆ is dissolved well in a carbonate solvent, and has high ion conductivity, and thus, is preferable as the lithium salt of the present invention.

The lithium salt may be included in the non-aqueous electrolyte solution at a concentration of 0.5 M to 3.0 M, specifically, at a concentration of 1.0 M to 2.0 M. When the concentration of a lithium salt satisfies the above range, the yield of lithium ions (Li+ transference number) and the dissociation of lithium ions are improved, so that the output properties of a battery may be improved.

When the concentration of the lithium salt is less than 0.5 M, the mobility of lithium ions is reduced, so that the effect of improving low-temperature output and improving cycle properties during high-temperature storage is insignificant, and when the concentration of the lithium salt is greater than 3.0 M, the viscosity of the non-aqueous electrolyte solution may be excessively increased to degrade the impregnation of the non-aqueous electrolyte solution, and the effect of forming a film may be reduced.

### (b) Organic solvent

Various organic solvents commonly used in a lithium electrolyte may be used without limitation as the organic solvent, and preferably, the organic solvent may include a cyclic carbonate-based solvent and a linear carbonate-based solvent.

The cyclic carbonate-based solvent is a high-viscosity organic solvent having a high dielectric constant, and thus, may dissociate a lithium salt well in an electrolyte, and may be one or more selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate. Among the above, in terms of ensuring high ion conductivity, ethylene carbonate (EC) may be included.

In addition, the linear carbonate-based solvent is a low-viscosity, low-dielectric constant organic solvent, and may be one or more selected from the group consisting of dimethyl carbonate (DMC), diethyl carbonate (DEC), dipropyl carbonate, ethylmethyl carbonate (EMC), methylpropyl carbonate, and ethylpropyl carbonate. Among these, ethylmethyl carbonate (EMC), which is preferable in terms of boiling point and viscosity, may be included.

In the present invention, the volume ratio of the cyclic carbonate-based solvent and the linear carbonate-based solvent may be 1:10 to 5:5, specifically 2:8 to 4:6, and more specifically 2:8 to 3:7.

In addition, in order to prepare an electrolyte solution having a high ion conductivity, the organic solvent may further include a linear carbonate-based solvent and/or a cyclic carbonate-based solvent having a low melting point, and high stability at high temperatures, in addition to the cyclic carbonate-based solvent and/or linear carbonate-based solvent.

The linear ester-based solvent may be one or more selected from the group consisting of methyl acetate, ethyl acetate, propyl acetate, methyl propionate, ethyl propionate, propyl propionate, and butyl propionate.

In addition, the cyclic ester-based solvent may be one or more selected from the group consisting of γ-butyrolactone, γ-valerolactone, γ-caprolactone, σ-valerolactone, and ε-caprolactone.

The remainder of the total weight of the non-aqueous electrolyte solution except for the contents of other components, for example, the lithium salt, the first additive, the second additive, and a third additive to be describer later, other than the organic solvent, may be the organic solvent unless otherwise stated.

### (c) First additive and second additive

The non-aqueous electrolyte solution of the present invention includes a first additive represented by Formula 1 below, and a second additive represented by Formula 2 below.

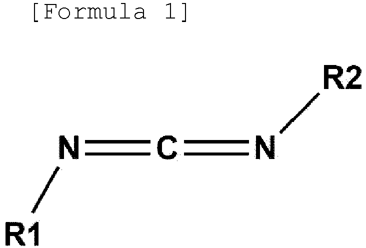

In Formula 1 above, R1 and R2 are the same as or different from each other, and are each independently a substituted or unsubstituted C₁-C₁₀ alkyl group, a substituted or unsubstituted C₃-C₁₅ cycloalkyl group, or a substituted or unsubstituted C₆-C₃₀ aryl group.

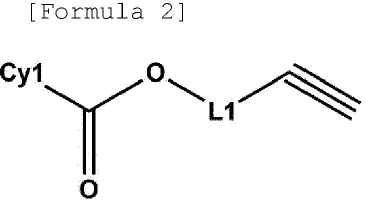

In Formula 2 above, Cy1 is a substituted or unsubstituted C₂-C₃₀ heterocyclic group, and L1 is a direct bond, or a substituted or unsubstituted C₁-C₁₀alkylene group.

When the first additive contacts moisture (H₂O), the - C=N- bond is decomposed, and at the same time, a hydrogen bond is formed and a reaction chemically consuming H₂O occurs, so that the moisture in a battery may be controlled, and accordingly, the generation of a Lewis acid by the reaction of a lithium salt with moisture may be suppressed.

The second additive generates a propargyl radical intermediate which may be electrochemically reductive decomposed, thereby having an excellent ability to form a robust SEI film of nitrile-based and polymer components through a reaction of the generates radicals, so that the durability of a battery may be improved.

When only the first additive is used, there is an effect of improving an initial capacity retention rate by controlling HF generation, but as cycles are repeated, lifespan degradation due to continuous decomposition of salts and interface deterioration between an electrode and an electrolyte may not be prevented.

Even when only the second additive is used, there is an effect of suppressing the elution of metal ions from a positive electrode and improving the durability of a negative electrode SEI film, thereby improving the lifespan of a battery, but it is difficult to improve the initial resistance of the battery.

When the two additives are used together, there are effects of suppressing the HF formation through moisture removal as well as strengthening the negative electrode SEI film, so that not only the phenomenon in which the eluted transition metal is electro-deposited on the negative electrode may be controlled, but also the formed SEI film may be prevented from being etched by HF, and thus initial performance and lifespan may be secured at the same time.

Particularly, when an LFP-based positive electrode, which has better structural stability than a positive electrode of a layered structure such as a lithium-nickel-cobalt-manganese (NCM)-based positive electrode, but is sensitive to moisture, and whose structure may be deformed due to the elution of metal ions, is used together with the additive combination of the present invention, problems of the LFP-based positive electrode may be effectively solved, so that the structural stability of a battery and thus the long-term durability thereof may be secured.

In an embodiment of the present invention, R1 and R2 in Formula 1 above are the same as or different from each other, and may each independently be a substituted or unsubstituted C₃-C₁₅ cycloalkyl group, preferably cyclohexyl group.

In an embodiment of the present invention, the first additive may be represented by Formula 1-1 below.

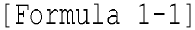

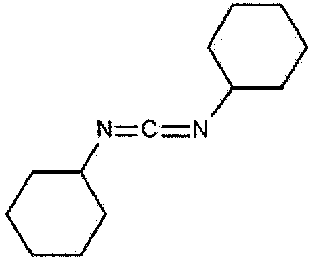

In an embodiment of the present invention, Cy1 of Formula 2 above may be a nitrogen-containing heterocyclic group, L1 may be represented by -(CH₂)ₙ-, and n may be an integer of 1 to 10, preferably an integer of 1 to 5.

In an embodiment of the present invention, Cy1 of Formula 2 above may be a substituted or unsubstituted C₂-C₁₀ heterocyclic group containing two or more nitrogen atoms, preferably a substituted or unsubstituted imidazolyl group.

In an embodiment of the present invention, L1 of Formula 2 above may be a methylene group or an ethylene group, preferably a methylene group.

In an embodiment of the present invention, the second additive may be represented by Formula 2-1 below.

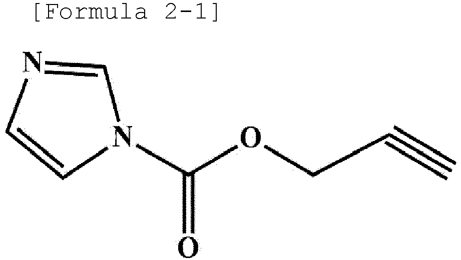

In an embodiment of the present invention, an amount of the first additive and an amount of the second additive may each be 0.1 wt% to 5 wt% based on the total weight of the non-aqueous electrolyte solution.

Specifically, the amount of the first additive may be 0.1 wt% to 1 wt%, preferably 0.1 wt% to 0.5 wt%, based on the total weight of the non-aqueous electrolyte solution.

When the amount of the first additive is less than 0.1 wt%, the effect of removing moisture by the addition of the first additive may be insignificant, and when greater than 5 wt%, the amount of C=N bonds in a battery is increased, thereby causing the separation between a current collector and an active material due to the elution of Cu in the current collector, which may cause the deterioration of a negative electrode, and thus degradation in lifespan properties.

The amount of the second additive may be 0.1 wt% to 1 wt%, preferably 0.1 wt% to 0.5 wt%, based on the total weight of the non-aqueous electrolyte solution.

When the amount of the second additive is less than 0.1 wt%, the effect of removing metal ions by the addition of the second additive may be insignificant, and when greater than 5 wt%, the initial film resistance may be increased as the thickness of the SEI film increases.

In an embodiment of the present invention, the weight ratio of the first additive and the second additive may be 1:5 to 5:1, preferably 1:2 to 2:1, and more preferably 1:1 to 1:2. When the weight ratio of the first additive and the second additive is included in the above range, it is preferable in that it is possible to obtain an optimal synergistic effect while preventing the problems caused by an excessive input of the first additive and the second additive described above.

In an embodiment of the present invention, the weight of the second additive may be greater than the first additive, in which case it may help to improve the high-temperature durability of a battery.

### (d) Third additive

Meanwhile, the non-aqueous electrolyte solution for a lithium secondary battery according to the present invention may selectively further include a third additive capable of forming a stable film on the surface of a negative electrode and a positive electrode without significantly increasing initial resistance, suppressing the decomposition of a solvent in the non-aqueous electrolyte solution, and serving as a complement to improve the mobility of lithium ions.

For example, the third additive may include one or more compounds selected from the group consisting of a vinylsilane-based compound, a phosphate-based compound, a sulfite-based compound, a sulfone-based compounds, sulfate-based compounds, a sultone-based compound, a halogen-substituted carbonate-based compound, a nitrile-based compound, a borate-based compound, and a lithium salt-based compound.

The vinylsilane-based compound may be electrochemically reduced on the surface of the negative electrode to form stable SEI, thereby improving the durability of a battery. More specifically, as a vinylsilane-based compound, a tetravinylsilane and the like may be included.

The phosphate-based compound is a component electrochemically decomposed on the surface of the positive electrode and the negative electrode, thereby assisting in the formation of an SEI film, and may improve the lifespan properties of a secondary battery. More specifically, one or more compounds selected from the group consisting of lithium difluoro(bisoxalato)phosphate, tris(trimethyl silyl)phosphate (TMSPa), tris(trimethyl silyl)phosphite (TMSPi), tris(2,2,2-trifluoroethyl)phosphate (TFEPa), and tris(trifluoroethyl)phosphite (TFEPi) may be included.

The sulfite-based compound may include one or more compounds selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite.

The sulfone-based compound may include one or more selected from the group consisting of divinyl sulfone, dimethyl sulfone, diethyl sulfone, methylethyl sulfone, and methylvinyl sulfone.

The sulfate-based compound may include one or more selected from the group consisting of ethylene sulfate (Esa), trimethylene sulfate (TMS), methyltrimethylene sulfate (MTMS).

The sultone-based compound may include at least one compound selected from the group consisting of 1,3-propane sultone (PS) and 1,4-butane sultone, except for the compound represented by Formula 2 above.

As the halogen-substituted carbonate-based compound, fluoroethylene carbonate (FEC) and the like may be included.

In addition, the nitrile-based compound may include one or more compounds selected from the group consisting of succinonitrile (SN), adiponitrile (Adn), acetonitrile, propionitrile, butyronitrile, valeronitrile, caprylonitrile, heptanenitrile, cyclopentanecarbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The lithium salt-based compound is a compound different from the lithium salt included in the non-aqueous electrolyte, and may include one or more compounds selected from the group consisting of lithium difluoro(oxalato)borate (LiDFOB), lithium bisoxalato borate (LiBOB), lithium 2-trifluoromethyl-4,5-dicyanoimidazole (LiTDI), and LiBF₄.

Preferably, the third additive may be lithium difluoro(oxalato)borate (LiDFOB). When LiDFOB is included in the non-aqueous electrolyte solution, there is an effect of forming a stable film including a BₓO_{y}-based component on the surface of positive electrode/negative electrode through an electrochemical reaction. The film formed on the surface of the positive electrode may suppress the elution of metal ions, and the film formed on the surface of the negative electrode may suppress the electro-deposition of eluted metal ions on the surface of the negative electrode, and also prevent additional decomposition of the electrolyte solution at high temperatures. Through the above action, the electrolyte solution including LiDFOB may contribute to improving the high-temperature performance of a battery.

The third additive may be included in an amount of 20 wt% or less, preferably 10 wt% or less, more preferably 0.1 wt% to 2 wt%, based on the total weight of the non-aqueous electrolyte solution. When the amounts of the above additives are greater than the above ranges, side reactions may excessively occur in an electrolyte during the charging and discharging of a lithium secondary battery, and the additives may not be sufficiently decomposed at high temperatures, and thus, be present as not being reacted or being precipitated in the non-aqueous electrolyte solution, so that the lifespan or resistance properties of the secondary battery may be degraded.

### (2) Positive electrode

The positive electrode according to the present invention includes a lithium iron phosphate (LFP)-based composite oxide. Specifically, the positive electrode includes a positive electrode current collector, and a positive electrode active material layer formed on the positive electrode current collector, and a positive electrode active material included in the positive electrode active material layer may be composed of the lithium iron phosphate-based composite oxide.

An LFP-based positive electrode has an olivine structure, and is excellent in structural stability and long-term lifespan compared to a positive electrode having a layered structure which has a risk of structural collapse, such as an NCM-based positive electrode. However, the LFP-based positive electrode has high moisture sensitivity and voltage dependence, and is vulnerable to the problem of metal ion elution. When the above limitation is overcome by the additive combination of the present invention, it is possible to obtain a battery with excellent stability and lifespan compared to when the NCM-based positive electrode is used.

The positive electrode active material layer may be prepared by coating a positive electrode slurry including a positive electrode active material, a binder, a conductive material, a solvent, and the like on a positive electrode current collector, followed by drying and roll-pressing.

The positive electrode current collector is not particularly limited as long as it has conductivity without causing a chemical change in the battery. For example, stainless steel; aluminum; nickel; titanium; fired carbon; or aluminum or stainless steel that is surface-treated with one of carbon, nickel, titanium, silver, and the like may be used.

The lithium iron phosphate-based composite oxide may be represented by Formula 3 below.

[Formula 3] LiFe₁₋ₓMₓPO₄

In Formula 3 above, M is one or more selected from Ni, Co, Mn, Al, Mg, Y, Zn, In, Ru, Sn, Sb, Ti, Te, Nb, Mo, Cr, Zr, W, Ir, and V, and 0≤x≤1.

In an embodiment of the present invention, the lithium iron phosphate-based composite oxide may be LiFePO₄.

The positive electrode active material may be included in an amount of 80 wt% to 99 wt%, specifically 90 wt% to 99 wt% based on the total weight of solids in a positive electrode slurry. At this time, when the amount of the positive electrode active material is 80 wt% or less, energy density is lowered to lower capacity.

The binder in the positive electrode slurry is a component for assisting in bonding of an active material and a conductive material, and in bonding to a current collector, and is typically added in an amount of 1 wt% to 30 wt% based on the total weight of solids in a positive electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene-mononmer, styrene-butadiene rubber, nitrile-butadiene rubber, fluorine rubber, or various copolymers thereof.

In addition, the conductive material in the positive electrode slurry is a material imparting conductivity without causing a chemical change in the battery, and may be added in an amount of 0.5 wt% to 20 wt% based on the total weight of solids in the positive electrode slurry.

Representative examples of the conductive material may include carbon black such as acetylene black, Ketjen black, channel black, furnace black, lamp black, or thermal black; graphite powder of natural graphite, artificial graphite, or graphite, which has a very developed crystal structure; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative.

In addition, a solvent of the positive electrode slurry may include an organic solvent such as N-methyl-2-pyrrolidone (NMP), and may be used in an amount such that a preferred viscosity is achieved when the positive electrode active material, and selectively, a binder, a conductive material, and the like are included. For example, the solvent may be included in an amount such that the concentration of solids in a positive electrode slurry including a positive electrode active material and selectively, a binder and a conductive material is 10 wt% to 90 wt%, preferably 40 wt% to 85 wt%.

### (3) Negative electrode

The negative electrode may be prepared by coating a negative electrode slurry including a negative electrode active material, a binder, a conductive material, a solvent, and the like on a negative electrode current collector, followed by drying and roll-pressing.

The negative electrode current collector typically has a thickness of 3 umto 500um. The negative electrode current collector is not particularly limited as long as it has high conductivity without causing a chemical change in the battery. For example, copper; stainless steel; aluminum; nickel; titanium; fired carbon, copper or stainless steel that is surface-treated with one of carbon, nickel, titanium, silver, and the like, or an aluminum-cadmium alloy and the like may be used. Also, as in the case of the positive electrode current collector, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

In addition, the negative electrode active material may include one or more selected from the group consisting of a lithium metal, a carbon material capable of reversible intercalation/de-intercalation of lithium ions, a metal or an alloy of the metal and lithium, a metal composite oxide, a material capable of doping and undoping lithium, and a transition metal oxide.

As the carbon material capable of reversible intercalation/de-intercalation of lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one or more selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, Li _{X} Fe₂O₃(0≤x≤1), Li _{X} WO₂(0≤x≤1), and SnₓMe_{1- X} Me'_{Y}O _{z} (Me: Mn, Fe, Pb, Ge; Me': Al, B, P, Si, an element each in Group, Group 2, and Group 3 of the periodic table, halogen; 0<x≤1; 1≤y≤3; 1≤z≤8) may be used.

The material capable of doping and undoping lithium may be Si, SiOₓ(0<x≤2), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO₂ and used. The element Y may be selected from the group consisting of Mg, Ca, Sr, Ba, Ra, Sc, Y, Ti, Zr, Hf, Rf, V, Nb, Ta, Db(dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

In the present invention, when the negative electrode active material is graphite, it is advantageous in terms of high-temperature durability.

The negative electrode active material may be included in an amount of 80 wt% to 99 wt% based on the total weight of solids in a negative electrode slurry.

The binder in the negative electrode active material is a component for assisting in bonding between a conductive material, an active material, and a current collector, and is typically added in an amount of 1 wt% to 30 wt% based on the total weight of solids in a negative electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene mononmer, styrene-butadiene rubber, nitrile-butadiene rubber, fluorine rubber, styrene-butadiene rubber-carboxymethyl cellulose (SBR-CMC), or various copolymers thereof.

The conductive material in the negative electrode active material is a component for further improving the conductivity of a negative electrode active material, and may be added in an amount of 0.5 wt% to 20 wt% based on the total weight of solids in a negative electrode slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder of natural graphite, artificial graphite, or graphite, which has a very developed crystal structure; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative.

A solvent of the negative electrode slurry may include water, or an organic solvent such as NMP, an alcohol, or the like, and may be used in an amount such that a preferred viscosity is achieved when the negative electrode active material, and selectively, a binder, a conductive material, and the like are included. For example, the solvent may be included in an amount such that the concentration of solids in a slurry including a negative electrode active material and selectively, a binder and a conductive material is 40 wt% to 75 wt%, preferably 40 wt% to 65 wt%.

### (4) Separator

The lithium secondary battery according to the present invention includes a separator between the positive electrode and the negative electrode.

The separator is to separate the negative electrode and the positive electrode and to provide a movement path for lithium ions. Any separator may be used without particular limitation as long as it is a separator commonly used in a secondary battery. Particularly, a separator having excellent electrolyte solution impregnation as well as low resistance to ion movement in the electrolyte solution is preferable.

Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

The lithium secondary battery according to the present invention as described above may be usefully used in portable devices such as a mobile phone, a notebook computer, and a digital camera, and in electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

Hereinafter, the present invention will be described in detail with reference to specific examples.

### Best Models

### <Examples: Manufacturing of lithium secondary battery>

### Example 1.

### (1) Preparing non-aqueous electrolyte solution

In an organic solvent in which Ethylene carbonate (EC) :ethylmethyl carbonate (EMC) were mixed in a volume ratio of 3:7, lithium hexafluorophosphate (LiPF₆) was dissolved to 1.0 M to prepare a non-aqueous organic solution.

Thereafter, 0.2 wt% of the compound of Formula 1-1 above, 0.3 wt% of the compound of Formula 2-1 above, and the remainder of the non-aqueous organic solution were mixed to prepare 100 wt% of a non-aqueous electrolyte solution.

### (2) Manufacturing lithium secondary battery

LiFePO₄ as a positive electrode active material, carbon black as a conductive material, and polyvinylidene fluoride and nitrile-butadiene rubber as a binder were added at a weight ratio of 95.86:0.8:2.2:1.14 to N-methyl-2-pyrrolidone (NMP), which was a solvent, to prepare a positive electrode slurry (solid content: 67.5 wt%). The positive electrode slurry was applied to a positive electrode current collector (Al thin film) having a thickness of 15 um, dried and then roll-pressed to manufacture a positive electrode.

Graphite (artificial graphite:natural graphite=8:2) as a negative electrode active material, styrene-butadiene rubber-carboxymethyl cellulose (SBR-CMC) as a binder, carbon black as a conductive material, and carboxymethyl cellulose sodium (CMC) as a thickener were mixed at a weight ratio of 96.0:1.3:0.7:1, and then mixed with distilled water as a solvent to prepare a negative electrode active material slurry with a solid content of 47.0 wt%. The negative electrode active material slurry was applied to a negative electrode current collector (Cu thin film) having a thickness of 8 um, dried and then roll-pressed to manufacture a negative electrode.

The positive electrode, the negative electrode, and a separator composed of polypropylene/polyethylene/polypropylene (PP/PE/PP) were stacked in the order of positive electrode/separator/negative electrode, and the stacked structure was placed in a pouch-type battery case, followed by injecting the above-prepared non-aqueous electrolyte solution thereto to manufacture a lithium secondary battery.

### Example 2.

A lithium secondary battery was manufactured in the same manner as in Example 1 except that 1 wt% of lithium difluoro(oxalato)borate (LiDFOB) was further added when preparing a non-aqueous electrolyte solution.

### Example 3.

A lithium secondary battery was manufactured in the same manner as in Example 1 except that the amount of the compound of Formula 1-1 above was changed to 0.4 wt% when preparing a non-aqueous electrolyte solution.

### Example 4.

A lithium secondary battery was manufactured in the same manner as in Example 1 except that the amount of the compound of Formula 2-1 above was changed to 0.5 wt% when preparing a non-aqueous electrolyte solution.

### Comparative Example 1.

A lithium secondary battery was manufactured in the same manner as in Example 1 except that the compound of Formula 1-1 above and the compound of Formula 2-1 above were not added when preparing a non-aqueous electrolyte solution.

### Comparative Example 2.

A lithium secondary battery was manufactured in the same manner as in Example 1 except that the compound of Formula 2-1 above was not added when preparing a non-aqueous electrolyte solution.

### Comparative Example 3.

A lithium secondary battery was manufactured in the same manner as in Example 1 except that the compound of Formula 1-1 above was not added when preparing a non-aqueous electrolyte solution.

### Comparative Example 4.

A lithium secondary battery was manufactured in the same manner as in Example 1 except that the amount of the compound of Formula 1-1 above was changed to 6 wt%, and the compound of Formula 2-1 was not added when preparing a non-aqueous electrolyte solution.

### Comparative Example 5.

A lithium secondary battery was manufactured in the same manner as in Example 1 except that the compound of Formula 1-1 above was not added, and the amount of the compound of Formula 2-1 above was changed to 6 wt% when preparing a non-aqueous electrolyte solution.

### Comparative Example 6.

A lithium secondary battery was manufactured in the same manner as in Example 1 except that the amount of the compound of Formula 1-1 above and the amount of the compound of Formula 2-1 above were each changed to 6 wt% when preparing a non-aqueous electrolyte solution.

### Comparative Example 7.

A lithium secondary battery was manufactured in the same manner as in Example 1 except that a compound of Formula A below was used instead of the compound of Formula 1-1 above, and the compound of Formula 2-1 above was not added when preparing a non-aqueous electrolyte solution.

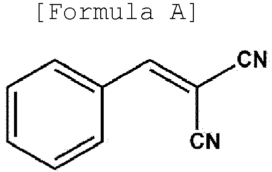

### Comparative Example 8.

A lithium secondary battery was manufactured in the same manner as in Example 1 except that the compound of Formula 1-1 above was not added, and a compound of Formula B below was used instead of the compound of Formula 2-1 above when preparing a non-aqueous electrolyte solution.

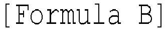

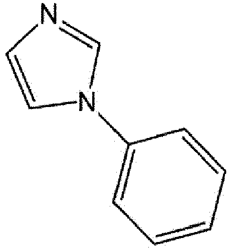

### Comparative Example 9.

A lithium secondary battery was manufactured in the same manner as in Example 1 except that the compound of Formula A above was used instead of the compound of Formula 1-1 above, and the compound of Formula B above was used instead of the compound of Formula 2-1 above when preparing a non-aqueous electrolyte solution.

### Comparative Example 10.

A lithium secondary battery was manufactured in the same manner as in Example 1 except that LiNi_{0.8}Co_{0.1}Mn_{0.1}O₂ was used as a positive electrode active material instead of LiFePO₄.

### Comparative Example 11.

A lithium secondary battery was manufactured in the same manner as in Example 1 except that LiCoO₂ was used as a positive electrode active material instead of LiFePO₄.

### <Experimental Examples: Evaluation of high-temperature storage of lithium secondary battery>

### Experimental Example 1. Measurement of capacity retention rate after high-temperature storage

For each of the lithium secondary batteries manufactured in Examples and Comparative Examples, formation was performed at a current of 200 mA (0.1 C rate), and then gas in the battery was removed (degas process). The lithium secondary battery from which gas was removed was transferred to a charger/discharger at room temperature (25°C), and then charged to 3.6 V at a rate of 0.33 C under the condition of constant current/constant voltage, followed by 0.05 C cut-off charging, and then discharged to 2.5 V at 0.33 C. At this time, after repeating the charging/discharging 3 times each, the discharge capacity was measured using the PNE-0506 charger/discharger (Manufacturer: PNE solution, 5V, 6A), and the discharge capacity at this time was set to an initial discharge capacity. Thereafter, charging under the condition of constant current/constant voltage to 3.6V at a rate of 0.33 C, and 0.05 C cut-off charging were performed, and then the lithium secondary battery was stored at 60°C for 12 weeks.

Thereafter, the lithium secondary battery was transferred to a charger/discharger at room temperature (25°C), and then charged to 3.6 V at a rate of 0.33 C under the condition of constant current/constant voltage, followed by 0.05 C cut-off charging, and then discharged to 2.5 V at 0.33 C. After repeating the charging/discharging 3 times each, charging/discharging (PNE-0506 charger/discharger, manufacturer: PNE solution, 5V, 6A) was continued under the conditions of 45°C and 1 C/1 C to calculate a capacity retention rate (%) up to 200 cycles, and the results are shown in Table 1 below.

### Experimental Example 2. Measurement of resistance increase rate

For each of the lithium secondary batteries manufactured in Examples and Comparative Examples, formation was performed at a current of 200 mA (0.1 C rate), and then gas in the battery was removed (degas process). The lithium secondary battery from which gas was removed was transferred to a charger/discharger at room temperature (25°C), and then charged to 3.6 V at a rate of 0.33 C under the condition of constant current/constant voltage, followed by 0.05 C cut-off charging, and then discharged to 2.5 V at 0.33 C. At this time, after repeating the charging/discharging 3 times each, discharging was performed at SOC 50% with 2.5 C for 10 seconds to confirm an initial resistance. A voltage dropped during the discharging was divided by a current to calculate a resistance value. At this time, the voltage was measured using the PNE-0506 charger/discharger (Manufacturer: PNE solution, 5V, 6A).

Thereafter, the charge/discharge process was continued under the same conditions, and at the end of 200 cycles, the voltage was lowered to SOC 50% SOC, and then the lithium secondary battery was discharged with pulses for 10 seconds under the condition of 2.5 C to measure a discharge resistance. At this time, resistance increase rates after 200 cycles compared to the initial resistance are shown in Table 1 below.

### Experimental Example 3. Measurement of metal elution amount

A fresh LiFePO₄ positive electrode was punched to a size of 1 cm X 1 cm and a total of 10 sheets thereof were respectively placed in a beaker together with 10 g of the non-aqueous electrolyte solution prepared in each of Examples 1 to 4 and Comparative Examples 1 to 9, and stored at 60°C for 2 weeks, and then the amount of Fe eluted during the 2 weeks was analyzed through an ICP analysis method (inductively coupled plasma optical emission spectrophotometer (ICP-OES), Perkin Elimner Corporation), and the results are shown in Table 1 below.

**[Table 1]**

| | Positive electrode | Additive (wt%) | | | Experiment al Example 1 | Experiment al Example 2 | Experiment al Example 3 |
|---|---|---|---|---|---|---|---|
| | | First | Second | Third | Capacity retention rate (%) | Resistance increase rate (%) | Metal elution amount (ppm) |
| Example 1 | LFP | Formula 1-1 (0.2) | Formula 2-1 (0.3) | - | 98.2 | 3.1 | 587 |
| Example 2 | LFP | Formula 1-1 (0.2) | Formula 2-1 (0.3) | LiDFOB (1.0) | 98.9 | 1.4 | 442 |
| Example 3 | LFP | Formula 1-1(0.4) | Formula 2-1 (0.3) | - | 97.8 | 3.7 | 550 |
| Example 4 | LFP | Formula 1-1(0.2) | Formula 2-1 (0.5) | - | 98.4 | 1.9 | 488 |
| Comparative Example 1 | LFP | - | - | - | 85.4 | 15.4 | 2,512 |
| Comparative Example 2 | LFP | Formula 1-1(0.2) | - | - | 95.8 | 5.5 | 1,035 |
| Comparative Example 3 | LFP | - | Formula 2-1(0.3) | - | 96.7 | 5.2 | 1,120 |
| Comparative Example 4 | LFP | Formula 1-1 (6) | - | - | 95 | 5.8 | 1,030 |
| Comparative Example 5 | LFP | - | Formula 2-1(6) | - | 95.2 | 5.6 | 1,113 |
| Comparative Example 6 | LFP | Formula 1-1(6) | Formula 2-1 (6) | - | 94.1 | 5.2 | 1,101 |
| Comparative Example 7 | LFP | Formula A(0.2) | - | - | 89.7 | 10.4 | 2,130 |
| Comparative Example 8 | LFP | - | Formula B (0. 3) | - | 90.4 | 8.7 | 2,207 |
| Comparative Example 9 | LFP | Formula A(0.2) | Formula B (0.3) | - | 90.1 | 7.5 | 1,986 |
| Comparative Example 10 | NCM | Formula 1-1 (0.2) | Formula 2-1 (0.3) | - | 93.5 | 6.2 | - |
| Comparative Example 11 | LCO | Formula 1-1 (0.2) | Formula 2-1 (0.3) | - | 91.9 | 8 . 8 | - |

From the results of the experiments, it can be confirmed that in the electrolyte solutions of Examples 1 to 4 in which the first additive and the second additive according to the present invention were each included in an amount of 0.1 wt% to 5 wt%, the metal elution amount was all measured as low as 600 ppm or less, and the batteries respectively including the electrolyte solutions of Examples 1 to 4 had a capacity retention rate of 97% or greater and a resistance increase rate of 4% or less, indicating excellent lifespan properties and resistance properties. Among the above, the electrolyte solution of Example 2 in which LiDFOB was further included as the third additive was most excellent in all aspects of metal elution amount, capacity retention rate, and resistance increase rate.

Specifically, it can be seen that the results of Experimental Examples 1 to 3 of Examples are all excellent compared to those of a case in which an additive was not used (Comparative Example 1), as well as a case in which an additive having a different structure from that of Formula 1 and/or Formula 2 of the present invention was used(Comparative Examples 7 to 9), and a case in which only one of the first additive and the second additive was included (Comparative Examples 2 to 5).

In addition, it can be seen that even when both the first additive and the second additive were included, if the amounts thereof were excessive as in the case of Comparative Example 6, the metal elution amount improvement effect of an electrolyte and the lifespan and resistance properties of a battery including the electrolyte solution were not as good as those of Example 1.

In addition, it can be seen that in the cases of Comparative Example 10 in which an NCM oxide was used as a positive electrode active material instead of LFP, and Comparative Example 11 in which an LCO oxide was used, even when the same electrolyte solution as that of Example 1 was used, the effect was not as good as that of Example 1 in terms of capacity retention rate and resistance increase rate.

That is, it has been confirmed that when an electrolyte solution including the first and second additives each in a specific content range according to an embodiment of the present invention, there is a significant effect in improving the performance of a battery employing an LFP positive electrode, and when the electrolyte solution further includes a third additive, the effect may be further maximized.

## Claims

1. A lithium secondary battery comprising:
a non-aqueous electrolyte solution containing a lithium salt, an organic solvent, a first additive represented by Formula 1 below, and a second additive represented by Formula 2 below;
a positive electrode including a lithium iron phosphate-based composite oxide;
a negative electrode including a negative electrode active material; and
a separator interposed between the positive electrode and the negative electrode,
wherein an amount of the first additive and an amount of the second additive are each 0.1 wt% to 5 wt% based on the total weight of the non-aqueous electrolyte solution: 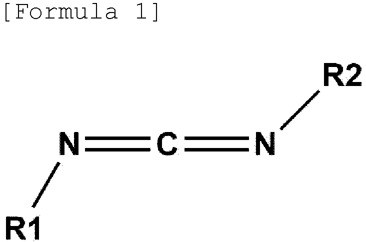
wherein in Formula 1 above,
R1 and R2 are the same as or different from each other, and are each independently a substituted or unsubstituted C₁-C₁₀ alkyl group, a substituted or unsubstituted C₃-C₁₅cycloalkyl group, or a substituted or unsubstituted C₆-C₃₀ aryl group, and 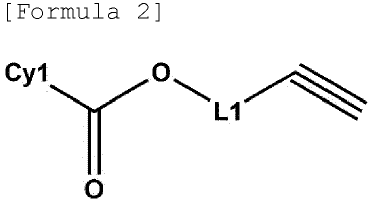
wherein in Formula 2 above,
Cy1 is a substituted or unsubstituted C₂-C₃₀ heterocyclic group, and
L1 is a direct bond, or a substituted or unsubstituted C₁-C₁₀ alkylene group.

2. The lithium secondary battery of claim 1, wherein R1 and R2 are the same as or different from each other, and are each independently a substituted or unsubstituted C₃-C₁₅ cycloalkyl group.

3. The lithium secondary battery of claim 1, wherein Cy1 of Formula 2 above is a nitrogen-containing heterocyclic group, L1 is represented by -(CH₂)ₙ-, and n is an integer of 1 to 10.

4. The lithium secondary battery of claim 1, wherein the amount of the first additive is 0.1 wt% to 1 wt% based on the total weight of the non-aqueous electrolyte solution.

5. The lithium secondary battery of claim 1, wherein the amount of the second additive is 0.1 wt% to 1 wt% based on the total weight of the non-aqueous electrolyte solution.

6. The lithium secondary battery of claim 1, wherein the weight ratio of the first additive and the second additive is 1:5 to 5:1.

7. The lithium secondary battery of claim 6, wherein the weight ratio of the first additive and the second additive is 1:2 to 2:1.

8. The lithium secondary battery of claim 1, wherein the non-aqueous electrolyte solution further comprises lithium difluoro(oxalato)borate as a third additive.

9. The lithium secondary battery of claim 1, wherein the organic solvent comprises a cyclic carbonate-based solvent and a linear carbonate-based solvent.

10. The lithium secondary battery of claim 1, wherein the lithium iron phosphate-based composite oxide is represented by Formula 3 below:
[Formula 3] LiFe₁₋ₓMₓPO₄
wherein in Formula 3,
M is one or more selected from Ni, Co, Mn, Al, Mg, Y, Zn, In, Ru, Sn, Sb, Ti, Te, Nb, Mo, Cr, Zr, W, Ir, and V, and
0≤x≤1.

11. The lithium secondary battery of claim 1, wherein the positive electrode comprises a positive electrode current collector, and a positive electrode active material layer formed on the positive electrode current collector, and
a positive electrode active material included in the positive electrode active material layer is composed of the lithium iron phosphate-based composite oxide.

12. The lithium secondary battery of claim 1, wherein the negative electrode active material comprises graphite.
